(19) Europäisches Patentamt
European Patent Office
Office européen des brevets

(11) **EP 1 864 707 A1**

(12) **EUROPÄISCHE PATENTANMELDUNG**

(43) Veröffentlichungstag:
**12.12.2007 Patentblatt 2007/50**

(51) Int Cl.:
**B01D 21/24** *(2006.01)* **G05D 7/01** *(2006.01)*

(21) Anmeldenummer: **07011098.6**

(22) Anmeldetag: **06.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **08.06.2006 DE 102006026632**

(71) Anmelder: **Kolb, Frank Reiner**
**65604 Elz (DE)**

(72) Erfinder: **Kolb, Frank Reiner**
**65604 Elz (DE)**

(74) Vertreter: **Mollekopf, Gerd Willi**
**European Patent Attorney**
**Vorderer Anger 239**
**86899 Landsberg am Lech (DE)**

(54) **Einlaufsystem für Sedimentationsbecken**

(57) Die Erfindung betrifft ein Absetzbecken (40) für eine Suspension, insbesondere Belebt-und/oder Klärschlamm, mit zumindest eine Einleiteinrichtung (2-5) zum Einleiten der zu trennenden Suspension, zumindest einer Auslassöffnung (5) der zumindest einen Einleiteinrichtung (2-5), wobei die Höhe (H) der Auslassöffnung im Absetzbecken (40) verstellbar ist und/oder der Austrittsquerschnitt (A1, A2) der Auslassöffnung verstellbar ist, und zumindest einer Verstelleinrichtung (3, 6; 3A; 13; 16; 3A, 35, 36) zur Veränderung der Höhe der Auslassöffnung (5) im Absetzbecken (40) und/oder des Austrittsquerschnitts der Auslassöffnung (5), dadurch gekennzeichnet, dass die Betätigung der Verstelleinrichtung (3, 6; 3A; 13; 16; 3A, 35, 36) mittels der in das Absatzbecken (40) zuströmenden Suspension erfolgt und/oder die Verstelleinrichtung auftrieb- und/oder abtriebbetätigbar ist.

Fig. 8a

EP 1 864 707 A1

**Beschreibung**

Im Bereich der Wasserversorgung und Abwasserentsorgung werden Sedimentationsbecken bzw. -behälter (beispielsweise Fällungsbecken, Regenklärbecken, Vor-, Zwischen- und/oder Nachklärbecken usw.) zur Trennung von Suspension in deren flüssige Anteile sowie deren organische und/oder mineralische Feststoffe eingesetzt. Die Dimensionierung und die Betriebsweise dieser Becken bzw. Behälter werden im europäischen Bereich nach einem Schichtenmodell und im amerikanisch beeinflussten Bereich nach einem Zonenmodell durchgeführt.

Im ersten Modelltyp werden vier horizontale Schichten berücksichtigt, die nach ihrer Funktion von der Flüssigkeitsoberfläche in vertikaler Richtung als Volumina für die vom Feststoff weitestgehend getrennte Flüssigkeit, die Zwischenspeicherung der Suspension bei erhöhtem Zulaufvolumenstrom, das Einmischen der zugeführten Suspension in den Flüssigkeitskörper des Beckens oder Behälters und den abgetrennten Feststoff-Partikel vorgesehen sind. Das zweite Modell geht von zwei vertikalen Zonen aus, wobei die erste Zone im Einlaufbereich als Flokkulationsfilter zur Bildung von größeren organischen Feststoffpartikeln innerhalb der Suspension und die zweite Zone zur Feststofftrennung der Suspension in Dispersionsmittel und dispergierte Phase betrachtet wird. Durch diverse Untersuchungen (beispielsweise Bretcher, U. et al: Untersuchungen über die Strömungs- und Feststoffverteilung in Nachklärbecken, 1984; und Freimann, R.: Strömungsstrukturen in horizontal durchströmten Nachklärbecken, 1999) von ausgeführten Becken und Behältern ist jedoch nachgewiesen worden, dass die Mischung zwischen beiden Modelltypen den realen Gegebenheiten am nächsten kommt.

Unabhängig von den Modellvorstellungen ist die Oberflächenbeschickung $A_O$ die wesentliche Kenngröße für die Trennung der dispergierten Phase von dem flüssigen Dispersionsmittel. Durch die durchgeführten Untersuchungen konnte jedoch festgestellt werden, dass die Oberflächenbeschickung sich nicht nur aus dem zugeführten Volumenstrom $\dot{Q}$ bezogen auf die vorhandene Oberfläche $A_B$ zusammensetzt, sondern interne Dichteströme $\dot{Q}_D$ und durch den Impulsaustausch des zugeführten Volumenstroms Zirkulationsströme $\dot{Q}_Z$ betrachtet werden müssen. Diese Erkenntnisse lassen sich in allgemeiner Form wie folgt zusammenfassen:

$$A_O = \frac{\dot{Q} + f_1(\dot{Q}_D) + f_2(\dot{Q}_Z)}{A_B}$$

Für den optimalen Betrieb der Becken bzw. Behälter sollte der Wert der Funktionen $f_1$ und $f_2$ gleich Null sein, so dass nur der zugeführte Volumenstrom für die Oberflächenbeschickung maßgeblich ist. Eine vollständige Unterdrückung des Dichte- bzw. Zirkulationsvolumenstroms ist jedoch aufgrund der praktischen Randbedingungen beispielsweise in Bezug auf die Geometrie, die klimatischen Verhältnisse und Suspensionseigenschaften nicht möglich. Bei den durchgeführten Untersuchungen konnte festgestellt werden, dass die Einleithöhe und Einleitfläche des Zufuhrbauwerkes einen wesentlichen Einfluss auf die Größe der jeweiligen zusätzlichen Volumenströme $\dot{Q}_D$ und $\dot{Q}_Z$ besitzen.

Die Größe der Dichteströmungen $\dot{Q}_D$ wird insbesondere durch die Einleithöhe zwischen dem zugeführten Volumenstrom und den in den Becken ausgebildeten Schichten/Zonen bestimmt. Je geringer der Dichtegradient zwischen dem zugeführten Volumenstrom und der umgebenden Suspensionsdichte ist, desto kleiner wird die Dichteströmung in den Sedimentationsbecken. Die Höhenlage des Feststoffspiegels in den Bekken ist jedoch nicht konstant, sie verschiebt sich nach oben sowohl bei zunehmender hydraulischer Belastung als auch bei Erhöhung der Feststofffracht.

Ein ähnlicher Zusammenhang existiert zwischen dem Impuls und damit der Geschwindigkeit des zugeführten Volumenstroms. Je größer die Einleitfläche der Einleitöffnungen des Zufuhrbauwerkes und je geringer damit die Austrittsgeschwindigkeit der zugeführten Suspension ist, desto kleinere Zirkulationsströme $\dot{Q}_Z$ bilden sich aus.

Durch die EP 0 923 971 A1 ist ein Verfahren und eine Vorrichtung zur Beschickung von Absetzbekken bekannt, bestehend aus einem vertikalen Zulaufrohr sowie einem konzentrisch zu diesem angeordneten Eintragszylinder. In dem Eintragszylinder befinden sich in drei verschiedenen Höhen Einleitöffnungen, die je nach Höhenlage des Feststoffspiegels geöffnet werden, um die Einleitung jeweils etwa auf Höhe des Feststoffspiegels vorzunehmen. Der Verschluss der jeweils nicht benötigten Öffnungen geschieht mit Klappen oder Jalousien, deren Öffnungs- und Schließvorgänge über bekannte Steuerungseinrichtungen erfolgen.

Besonders nachteilig bei dieser Ausführung ist, dass die Höhenlage der Einleitöffnungen in diskreten Schritten und nicht kontinuierlich über ein an die hydraulischen Randbedingungen angepasstes Höhenintervall erfolgt.

Die DE 44 31 369 A1 zeigt ein vertikales Zulaufrohr zu runden Sedimentationsbecken, das sich im oberen Bereich kontinuierlich zu einem Trichter mit horizontaler Richtung am Außenrand aufweitet. Innerhalb des Trichters ist ein höhenverstellbarer Leitschirm angeordnet, der eine Zwangsführung der aufsteigenden Flüssigkeit oder Suspension gewährleistet. Bei einem Absenken des Leitschirms verringert sich der wirksame Austrittsquerschnitt, bei einem Anheben des Leitschirms vergrößert sich der wirksame Austrittsquerschnitt. Auf diese Weise kann der jeweilige Austrittsquerschnitt den Durchsatzmengen angepasst werden und sicherstellen, dass auch bei unterschiedlichen Durchsatzmengen stets eine weitgehend gleiche Austrittsgeschwindigkeit erreicht wird. Die Höhenverstellung wird über einen Hydraulikantrieb oder mittels elektromotorisch oder manuell betätigter Gewindeantriebe vorgenommen.

In der JP 59 004 407 A und JP 2000 325 706 A wird eine variable Einlaufkonstruktion für Absetzbekken offenbart. Die einlaufende Flüssigkeit oder Suspension fließt innerhalb eines unten offenen Einlaufzylinders, dessen Unterkante in vertikaler Richtung verschoben werden kann, abwärts. Einlauföffnungen, die durchströmt werden müssen, um in den Beckenraum zu gelangen, existieren nicht. Die Höhe und die Höhenlage des einlaufenden Flüssigkeits- oder Suspensionsstrahles ergeben sich aus den physikalischen Gesetzmäßigkeiten von nach unten gerichteter Impulskraft und nach oben gerichteter Auftriebskraft durch die anwachsende Umgebungsdichte. Die Veränderung der Höhenlage dieses Einlaufzylinders wird durch einen Motorantrieb realisiert.

Durch die Fremdbetätigung des Leitschirmes (DE 44 31 369 A1) bzw. des Einlaufzylinders (JP 59 004 407 A und JP 2000 325 706 A) muss das System durch Sensoren oder visuell überwacht werden. Die automatische Sensorüberwachung ist besonders in der Abwasserreinigung durch die vielfältigen Störkomponenten anfällig für Fehlmessungen. Die visuelle Überwachung müsste permanent erfolgen und ist aufgrund des dafür notwendigen Personals nur bedingt durchführbar. Hinzu kommt, dass der apparative und personelle Aufwand für beide Überwachungsvarianten und damit die Kosten hoch sind.

In der WO 03/084635 A1 werden Absetzbecken vorgestellt, deren Einlaufbauwerke so gestaltet sind, dass sowohl die Höhenlage der Einlaufquerschnitte im Verhältnis zum Feststoffspiegel als auch die Höhe der Einlaufquerschnitte verändert werden können. Ziel ist auch hier die Anpassung an den Feststoffspiegel. Diese Anpassung geschieht entweder stufenlos durch Verschiebung bzw. teleskopierbare Höhenveränderung oder durch übereinander angeordnete Einlauföffnungen, die mittels Verschlusselementen einzeln oder in Kombination ganz oder teilweise geöffnet und geschlossen werden können. Über den Antrieb zur Verschiebung bzw. teleskopierbaren Höhenverstellung werden keine Aussagen gemacht.

Es ist Aufgabe der Erfindung, ein Absetzbecken für Suspensionen mit zumindest einer Einleiteinrichtung so weiterzuentwickeln, dass die Einleitung der Suspension in das im Auffangbecken gefasste Medium zuverlässig erfolgt. Insbesondere erfolgt die Suspensionseinleitung zuverlässig und selbstoptimierend.

Diese Aufgabe wird mit den Merkmalen des Anspruchs 1 gelöst.

Vorteilhafte Ausgestaltungen sind Gegenstand von Unteransprüchen.

Bei den oben beschriebenen Absetzbecken nach dem Stand der Technik wurde als nachteilig erkannt, dass zusätzliche Fremdenergie aufzubringen ist und zusätzliche und komplexe Steuersysteme vorzusehen sind, um die Anpassung der Einlauföffnungen an den Feststoffspiegel im Becken zu erreichen. Zur Erlangung von günstigen Sedimentationsverhältnissen ist es dort erforderlich, eine kontinuierliche Anpassung des Einlaufsystems an die Lage des Feststoffspiegels durchzuführen. Der Einsatz von Fremdenergie-erforderlichen Antrieben bringt gegenüber den schon aufgeführten Nachteilen noch weitere mit sich:

- Der Feststoffspiegel oder andere Parameter müssen für die Steuerung der Höhenanpassung erfasst und verarbeitet werden. Hierzu sind entsprechende Messeinrichtungen vorzusehen, die fast ausschließlich auf optoelektrischen Messzellen beruhen, die in kurzen Zeitabständen gereinigt und kalibriert werden müssen.

- Bei mehreren im Becken installierten Regelungen wie z. B. einer Steuerung der Rücklaufschlammentnahme kann es zu Störungen der Regelkreise untereinander kommen.

- Zusätzliche Betriebs- und Wartungskosten von Antrieben und Messeinrichtungen sind für den gesicherten Betrieb der Becken bei fremdenergiebetriebener Anpassung an den Feststoffspiegel erforderlich.

- Bei Ausfall der Versorgungsspannung oder Wartung der Antriebseinrichtung oder der Messeinrichtung versagt das komplette Einlaufsystem, wodurch die Sedimentationsleistung verschlechtert wird bzw. in der Abwasserreinigung die Ablaufwerte überschritten werden können.

Bei den fremdenergiebetriebenen Einlaufsystemen wurde in einem weiteren Zusammenhang nur geringfügig bzw. gar nicht beachtet, dass die Dichte- und Zirkulationsvolumenströme über die Feststoff-Fracht gekoppelt sind. Aus diesem Zusammenhang lässt sich schließen, dass in der Wasserversorgung und Abwasserreinigung große Suspensionsvolumenströme auch höhere Feststoffgehalte aufweisen und dadurch ein hoher Dichtegradient zwischen der zugeführten Suspension und der Flüssigkeit im Becken oder Behälter besteht.

Zur Lösung der Aufgabe wurden zwei Steuergrößen gefunden, die eine Aussage über die Fließ- und Feststoffbedingungen in der zugeführten Suspension bzw. im Sedimentationsbecken zulassen und einzeln oder kombiniert zur Optimierung des Suspensionseinlaufs in das Absetzbecken zum Einsatz kommen können. Die erste Größe stellt die Dichtedifferenz zwischen der mittleren Suspensionsdichte im Bereich der Einleiteinrichtung mit ihren Einleitöffnungen und der umgebenden mittleren Flüssigkeitsdichte im Becken dar. Diese Dichtedifferenz bewirkt bei einer teilweise oder vollständig beweglich angeordneten Einleiteinrichtung eine sich verändernde Auftriebskraft, der die Einleiteinrichtung durch eine Lageveränderung ausweicht. Als zweite Steuergröße kann der Impuls der zugeführten Suspension, der proportional zur deren Strömungsgeschwindigkeit ist, genutzt werden, indem dieser in einen Staudruck bzw. eine Staukraft in der Einleiteinrichtung umgewandelt wird. Da diese Steuergröße nicht nur bei Suspensionen, sondern auch bei reinen Flüssigkeiten auftritt, können auch diese durch das Verfahren bzw. mit der Vorrichtung den Becken oder Behältern zugeführt werden. In den nachfolgenden Betrachtungen werden jedoch alle Ausführungen für eine Suspension gemacht, bei der reinen Flüssigkeit beziehen sich die Ausführungen nur auf die Einflüsse, die auf den Impuls der Flüssigkeit zurückzuführen sind.

Gemäß Anspruch 1 ist ein Absetzbecken vorgesehen, bei dem die Änderung der Höhe und/oder des Austrittsquerschnitts zumindest einer Auslassöffnung selbsttätig und ohne Einsatz von Fremdenergie (also durch Verwendung der im System bereits vorhandenen Strömungs- oder potentiellen Energie) bewirkt wird, indem der Strömungsimpuls oder Strömungsdruck der zuströmenden Suspension und/oder der direkt und/oder indirekt wirkende Auftrieb (bzw. Abtrieb) der zumindest einen Einleiteinrichtung zur Verstellung der zumindest einen Einleiteinrichtung genutzt wird.

Die Suspension ist vorzugsweise zweiphasig. Der Begriff Absetzbecken umfasst auch jeglichen Behälter, in dem eine Suspension entmischt werden soll. Die Verstelleinrichtung zur Änderung der Höhe und/oder des Austrittsquerschnitts der zumindest einen Auslassöffnung muss nicht ein von der Einleiteinrichtung separates Element sein, vielmehr ist vorzugsweise die Verstelleinrichtung zumindest teilweise Bestandteil der Einleiteinrichtung. Eine Unterscheidung ist vielmehr in deren Funktionsweise im Absetzbecken zu sehen: Die zumindest eine Verstelleinrichtung als solche bewirkt die Änderung der Höhe und/oder des Austrittsquerschnitts der zumindest einen Auslassöffnung, und die zumindest eine Einleiteinrichtung bewirkt die Einleitung der Suspension durch zumindest eine Auslassöffnung in das Absetzbecken.

Vorteilhaft bildet die zumindest eine Einleiteinrichtung eine Kammer zwischen zumindest einem beweglich gelagerten und zumindest einem ortsfest gelagerten Teilelement oder zwischen zumindest zwei beweglich gelagerten Teilelementen, die in gegenläufige Richtungen zueinander verschiebbar sind. Das ortsfest gelagerte Teilelement oder ein Teil des ortsfest gelagerten Teilelements kann ein Teil eines festen Bauwerks des Absetzbeckens sein, beispielsweise Teil einer Trennwand.

Die zuvor dargestellten Zusammenhänge zwischen den Vorgängen in den Becken oder Behältern und den beiden Steuergrößen können in der hier vorgestellten Steuerung zur selbsttätigen Anpassung der Einleitöffnung(en) der Einleiteinrichtung in deren Höhenlage und/oder deren Öffnungsfläche angewendet werden.

Um die Steuergrößen zur selbsttätigen Verstellung der Einleitöffnungen zu nutzen, wird ein Verfahren vorgeschlagen, das mindestens aus einer Einleiteinrichtung besteht, die mindestens eine Zu- und Ablaufseite hat und mit einer Suspension durchströmt wird, wobei die Einleiteinrichtung mindestens zweiteilig ausgebildet ist und mindestens eines der Teile beweglich angeordnet ist. Die Ablaufseite ist so ausgestaltet, dass sie mindestens eine Einleitöffnung in das umgebende bzw. nachfolgende Becken oder den Behälter aufweist, deren Fläche und/oder Höhenlage veränderlich ist.

Um den Einfluss der Impulskraft der zugeführten Suspension zu erhöhen und besonders bei kleinen Volumenströmen eine Veränderung der Einleitöffnungen zu erzielen, wird eine Weiterbildung des Verfahrens so ausgebildet, dass während des Durchströmens beispielsweise eines Zellenrades die Strömungsenergie in ein Drehmoment umgewandelt wird. Das Drehmoment führt zu einer Rotation des Zellenrades, durch die die Austrittsfläche der Einleitöffnung verändert wird. Durch eine Umlenkung der Strömung wird die Strömungsenergie in eine Druckdifferenz umgewandelt, wodurch die Fläche und die Höhenlage der Einleitöffnung in das umgebende Becken verändert werden können.

In einer anderen Weiterbildung des Verfahrens wird der Einfluss der Auftriebskraft als Steuergröße erhöht und damit die Trägheit des Verfahrens verringert, indem die Vorrichtung, vorzugsweise der bewegliche Teil der Einleiteinrichtung, eine mittlere Dichte aufweist, die höchstens der des umgebenden Mediums innerhalb des Beckens entspricht.

Besonders vorteilhaft ist es, die Merkmale der Unteransprüche bezüglich der Impulskraft und der Auftriebskraft innerhalb des Verfahrens zu kombinieren, so dass die Einleiteinrichtung in einem großen Volumenstrom- und Feststoffbereich eingesetzt werden kann und eine kontinuierliche Veränderung der Einleitöffnung erfolgt.

Bei reinen Flüssigkeiten oder Suspensionen mit geringem Feststoffgehalt sowie bei kleinen Volumenströmen ergeben sich nur geringe Veränderungen sowohl in der Dichte als auch im Impuls der Flüssigkeit. Diese Veränderungen führen jedoch zu einer Veränderung des Höhenstandes in den Becken und Behältern, so dass der Höhenstand eine resultierende Größe der hydraulischen und partikulären Randbedingungen darstellt. Diese indirekt wirkende Größe kann in einer Weiterbildung des Verfahrens zur Steuerung der Einleitöffnung wie folgt genutzt werden: Das Verfahren besteht unter anderem aus einer Kammer, die segmentweise an jeder Zufuhröffnung oder monolithisch über alle Zufuhröffnungen ausgebildet werden kann. Die Kammer kann bei rechteckigen Becken oder Behältern gerade bzw. bei kreisrunden Becken oder Behältern zylindrisch aufgebaut sein. Durch die Mehrteilung der Kammer entsteht mindestens ein oberes und unteres bzw. ein linkes und rechtes Kammerteil, das in seiner Lage verändert werden kann. Aufgrund der geringen Kraftveränderung erfolgt die Positionierung der beweglichen Kammerteile vorzugsweise nicht nur indirekt durch die Strömung, sondern vielmehr über eine Verstelleinrichtung, deren Lage durch eine Veränderung des Höhenstandes vom Flüssigkeitsspiegel beeinflusst wird. Der Höhenstand des Flüssigkeitsspiegels ist wiederum über den Beschickungsvolumenstrom direkt proportional zur Strömung. Die Verstelleinrichtung kann beispielsweise ein offener oder geschlossener Verdrängungskörper sein, beispielsweise ein Hohlkörper, der über ein Verbindungselement, beispielsweise ein Seil, mit der Einleiteinrichtung verbunden ist. Das Verbindungselement kann auch so ausgeführt werden, dass die Höhenstandsveränderung, beispielsweise durch einen Hebel, verstärkt oder gedämpft auf die Einleiteinrichtung übertragen wird. Durch diesen Mechanismus lässt sich die Steuerungscharakteristik der Einleiteinrichtung den jeweiligen hydraulischen und partikulären Randbedingungen individuell anpassen.

In Becken oder Behältern, die zur Trennung von Suspensionen eingesetzt werden, bilden sich, wie schon zuvor erläutert, unterschiedliche Schichten an Feststoffen, Feststoff-Flüssigkeit und Flüssigkeit aus. In der Feststoff-Flüssigkeits-Schicht ist ein ausgeprägter Feststoffgradient vorhanden. Wird in diese Schicht durch die Einleiteinrichtung die Suspension mit ähnlichem Feststoffgehalt bzw. mit einer ähnlichen mittleren Dichte eingeleitet, so werden die Dichteströmungen weitestgehend unterdrückt. Bei einem hohen Anteil an organischen Feststoffen, wie beispielsweise in der Abwasserreinigung vorhanden, können sich die zugeführten Feststoffe, die als Flocken bezeichnet werden, mit den in der Feststoff-Flüssigkeits-Schicht vorhandenen Feststoffen schneller zu größeren Agglomeraten verbinden. Diese größeren Agglomerate sedimentieren schneller an den Boden bzw. auf die Feststoffschicht in den Becken oder Behältern. Dieser verbesserte Abscheidevorgang kann in einer Weiterbildung des Verfahrens dazu genutzt werden, dass die nachfolgenden oder umgebenden Becken oder Behälter bei gleichen maximalen Volumenströmen verkleinert und so die Investitionskosten verringert werden, oder dass bei gegebenen Becken- oder Behältergrößen ein höherer Volumenstrom mit einer größeren Feststoffbelastung in der gleichen Zeit getrennt und so ebenfalls Kosten eingespart werden können.

Durch die größeren Feststoffagglomerate findet in der Feststoffschicht eine geringere Vernetzung zwischen den einzelnen Agglomeraten statt, so dass die Feststoffschicht am Boden der Becken oder Behälter eine höhere Beweglichkeit aufweist, die deren Mobilität erhöht. Zur Entfernung der Feststoffschicht aus den Becken oder Behältern werden sogenannte Räumeinrichtungen eingesetzt, die die Feststoffschicht in Richtung des Gefälles zu einer zentralen Sammel- bzw. Entnahmestelle in den Becken oder Behältern transportieren, von wo die Feststoffschicht aus den Becken oder Behältern entfernt wird. Die Räumeinrichtungen besitzen sogenannte Schilde, die bei rechteckigen Becken oder Behältern über deren gesamte Breite oder Länge und bei runden Becken oder Behältern über mindestens deren Radius ausgebildet sind. Die Schilde müssen bei herkömmlichen Anlagen so ausgebildet sein, dass deren Schildhöhe über die zu transportierende Feststoffschicht hinausragt, damit diese an die zentrale Entnahmestelle transportiert werden kann. Aufgrund der verbesserten Flokkulation der organischen Feststoffe und damit verbunden der Zunahme an Mobilität der Feststoffschicht, kann in einer Weiterbildung des Verfahrens in Kombination mit der Einleiteinrichtung die Schildhöhe reduziert werden. Das Schild dient nur noch dazu, die adhäsive Bindung zwischen Feststoffschicht und Boden zu überwinden und der Feststoffschicht die Gleitrichtung zur Entnahmestelle vorzugeben. Je nach Ausbildung der Feststoffagglomerate kann die Höhe des Räumschildes bis auf wenige Millimeter reduziert und zu einem Draht ausgebildet werden, der ausschließlich die Adhäsionskräfte zwischen der Feststoffschicht und dem Becken- oder Behälterboden aufhebt. Durch die Verwendung der Einleitrichtung können die Räumeinrichtungen von der Schildhöhe verkleinert und dadurch deren notwendige Antriebsenergie reduziert werden, so dass die Betriebskosten gesenkt werden.

Eine kostengünstige Vorrichtung für die Einleiteinrichtung besteht aus einer allseitig geschlossenen Kammer, die eine feststehende Zufuhröffnung für die Suspension oder Flüssigkeit besitzt und deren Einleitöffnung aus einer beweglichen Klappe besteht. Die Klappe kann durch die Strömungsenergie (Strömungsdruck, Strömungsgeschwindigkeit usw.) betätigt werden. Je nach Anordnung der Klappe kann die Strömungsrichtung der Flüssigkeit oder Suspension in das Becken oder den Behälter variiert werden. In Abhängigkeit des Öffnungswinkels verändert sich sowohl die freie Durchströmfläche als auch deren Abströmhöhe.

Durch eine Verwirbelung, beispielsweise in der Form, dass die Flüssigkeit oder Suspension einen Drall aufgeprägt bekommt, wird die Austauschfläche zwischen dem Flüssigkeitskörper der Becken oder Behälter sowie der zugeführten Flüssigkeit oder Suspension vergrößert und dadurch ein Temperatur- oder Dichtegradient zwischen zugeführter und im Becken oder Behälter befindlicher Flüssigkeit oder Suspension schneller vergleichmäßigt. Diese vorteilhafte Ausgestaltung der Einleiteinrichtung wird in einer Weiterbildung durch ein Zellenrad verwirklicht. Die Flüssigkeit oder Suspension muss durch das Zellenrad strömen, wodurch diesem ein Drallimpuls aufgeprägt wird. Gleichzeitig dient das Zellenrad zur Steuerung einer verdrehbaren Blende, die die Einleitöffnung sowohl in ihrer Fläche als auch in ihrer Abströmposition verändert. Die Rückstellkraft zum Verschließen der Öffnung wird beispielsweise durch die Gewichtskraft des Blendenkörpers oder beispielsweise durch eine Feder bewirkt, die mit dem Blendenkörper verbunden ist.

Um eine Vergleichmäßigung der zugeführten Suspension zu erreichen, wird in einer Weiterbildung der Vorrichtung die Einleiteinrichtung vorteilhafterweise als Mischkammer ausgebildet bzw. um eine Mischkammer erweitert, die vor und/oder nach der Einleiteinrichtung installiert sein kann. Die Mischkammer ist beispielsweise mit Strömungsleitblechen versehen, so dass die Flüssigkeit oder Suspension mindestens in zwei Teilströme aufgeteilt werden und diese mindestens einmal umgelenkt und wieder aufeinander zugeführt werden. Durch diese Strömungsführung werden in der Mischkammer die zugeführte Suspension und/oder das in der Mischkammer befindliche Medium gemischt und vergleichmäßigt. Dadurch können beispielsweise Temperaturunterschiede in der Flüssigkeit oder Dichteunterschiede in der Suspension ausgeglichen werden. Die Einleitöffnungen der Einleiteinrichtung werden durch den Impuls und/oder die Dichtedifferenz so eingestellt, dass eine gleichmäßige und dadurch insgesamt geringe Belastung des umliegenden Beckens oder Behälters durch die Suspension erfolgt. Bei organischen Suspensionen wird in der Mischkammer eine Flokkulation zu größeren Partikeln erreicht. Dadurch werden die Sedimentationseigenschaften der dispersen Phase verbessert und die Sedimentationswirkung der umliegenden bzw. nachfolgenden Becken oder Behälter erhöht.

Die Mischkammer kann direkt in die Einleiteinrichtung integriert werden, so dass sowohl die Lage und Richtung als auch bei organischen Feststoffen deren Partikelgröße durch die Einleiteinrichtung beeinflusst werden kann. Eine besonders vorteilhafte Ausgestaltung der Kammer der Einleiteinrichtung besteht in einer Weiterbildung der Vorrichtung, indem die Kammer in Segmente unterteilt wird, die zu einem mäanderförmigen Durchfluss der Suspension führen. Durch diese Durchflussform bilden sich in der Kammer an jeder Umlenkung der Suspension Strömungswirbel aus, in denen die lokale Verweilzeit und die Anzahl der Stoßkollisionen der Partikel erhöht werden. Diese beiden Faktoren führen dazu, dass sich die organischen Feststoff-Partikel zu größeren Feststoffagglomeraten verbinden. In den nachfolgenden oder umgebenden Becken oder Behältern können diese größeren Feststoffagglomerate schneller abgeschieden und dadurch die Leistungsfähigkeit der Sedimentationsbecken oder - behälter erhöht werden.

Damit die zugeführte Suspension dem umgebenden bzw. nachgeordneten Becken oder Behälter in horizontaler und/oder vertikaler Ebene symmetrisch aufgegeben werden kann, ist in einer Weiterbildung der Vorrichtung die Einleiteinrichtung mehrteilig ausgebildet und mindestens zwei Teile sind beweglich angeordnet. Durch diese Ausführung kann der zugeführte Suspensionsstrahl eine möglichst große Austrittsfläche in der Einleiteinrichtung einnehmen und so sowohl der Impuls- als auch der Dichtegradient minimiert werden.

Bei kleinen Volumenströmen oder Druckverlusthöhen steht nur eine geringe Strömungsenergie für die Verstellung der Einleiteinrichtung zur Verfügung, so dass die Trägheit des Systems sehr groß ist. Eine kostengünstige und einfache Methode, die Trägheit zu verkleinern, besteht in einer geeigneten Materialauswahl für das Einleitsystem, hier im Besonderen für den oder die vertikal angeordneten beweglichen Teile. Besonders vorteilhaft ist es, die Materialdichte etwas kleiner oder identisch der Dichte der umgebenden Flüssigkeit oder Suspension auszuwählen bzw. einzustellen. Bei einer Materialdichte, die identisch zum umgebenden Medium ist, wird die Gewichtskraft des beweglichen Teils der Einleiteinrichtung aufgehoben und nur die Kräfte (Reibung, Gewicht, Verdrängung usw.) für die Lageveränderung des beweglichen Teils müssen durch die Strömungsenergie kompensiert werden. Bei einer geringeren Dichte des beweglichen Teils gegenüber dem umgebenden Medium können auch diese Kräfte zum Teil oder vollständig durch die Auftriebskräfte des beweglichen Teils der Einleiteinrichtung aufgehoben werden, so dass die Lageveränderung der Einleitöffnung selbst auf kleine Flüssigkeits- oder Suspensionsströme reagieren kann.

Bei hohen Feststoffgehalten und/oder hohen Gehalten an organischen Partikeln in der Suspension oder bei gelösten chemischen Substanzen in Flüssigkeiten, die beispielsweise durch Lichtzufuhr reaktiv werden, besteht die Notwendigkeit, die Einleiteinrichtung vor Einflüssen durch diese Substanzen, deren chemischen Reaktionen oder mikrobiologischen Aktivitäten zu schützen. Dieser Schutz ist durch ein Kompositmaterial für die Einleiteinrichtung möglich, das beispielsweise aus einer metallischen Außenhaut und einem Kunststoffträger besteht. Die metallische Außenhaut, beispielsweise Edelstahl, schützt den Kunststoff vor Beschädigung durch mineralische Partikel oder chemische Reaktionen. Bei einer Beschichtung der Außenhaut mit adhäsionsmindernden Substanzen, wie beispielsweise Polytetraflurethylen (PTFE), können mineralische und organische Partikel leicht abgleiten (Lotusblüteneffekt) und chemische Reaktionen haben keine Angriffsfläche zur Materialzerstörung. Die Beschichtungen können aufgrund ihrer zumeist unpolaren Molekülstruktur wesentlich leichter auf metallische Materialien als auf Kunststoffe aufgebracht werden. Gegenüber mikrobiellen Angriffen, beispielsweise durch biogen gebildete Schwefelsäure, können Kunststoffe durch biozid wirkende Beschichtungen oder durch eine Dotierung mit biozid wirkenden Metallen bzw. Metallionen geschützt werden. Bei der Dotierung der Kunststoffe mit den Bioziden sind diese beweglich in die Kunststoffmatrix eingebunden, so dass sie in die Grenzschicht zwischen umgebendem Medium (Flüssigkeit oder Suspension) und Oberfläche der Einleiteinrichtung diffundieren können. In dieser Grenzschicht behindern bzw. verhindern die Biozide über Jahre mikrobielle Aktivitäten, so dass die Funktion der Einleiteinrichtung gewahrt und der Wartungsaufwand bzw. die Wartungskosten minimiert sowie die Betriebsstabilität erhöht werden. Durch eine Kombination beider Materialen für die Einleiteinrichtung kann vorteilhafterweise die mittlere Dichte in den Bereich des umgebenden Mediums abgesenkt werden.

Für die Abscheideleistung der Becken oder Behälter ist zusätzlich zur Minimierung der Strömungsenergie auch die Abströmrichtung eine Einflussgröße, die berücksichtigt werden muss. Um die Abströmrichtung aus der Einleiteinrichtung horizontal bzw. nahezu horizontal zu gewährleisten, wird die Einleitöffnung mit einer mindestens zweiteiligen Abströmhülse gefasst, wobei der Teil der Hülse, der die Strömungsumlenkung in der Einleiteinrichtung bewirkt, in die Einleiteinrichtung hineinragt und die Aufnahme und Umlenkung der Flüssigkeit und Suspension bewirkt. Beim Austritt der Flüssigkeit oder Suspension aus der Einleitöffnung der Einleiteinrichtung wird der Flüssigkeits- oder Suspensionsstrahl durch die Hülsenteile geführt, und zwar so, dass sich die Stromlinien von der vertikalen in die horizontale Richtung umlenken können. Damit die Umlenkung möglichst vollständig erfolgt, sollte die Länge der Hülse, die die Einleitöffnung umfasst, mindestens das 1,5-fache des hydraulischen Durchmessers der Hülse und/oder eine mittlere Verweilzeit von mehr als einer Sekunde aufweisen.

Um die Reibungs- und damit die Druckhöhenverluste der Hülse gering zu halten, wird in einer Weiterbildung das Verhältnis von benetztem Umfang zur Ausströmfläche optimiert, indem die Ausströmfläche ein kreisförmiges oder quadratisches Profil aufweist.

Die Lageveränderungen durch den zugeführten Flüssigkeits- oder Suspensionsvolumenstrom und/oder durch die Höhenstandsveränderungen des Flüssigkeitsspiegels variieren in Abhängigkeit der Becken- bzw. Behältergröße bzw. -durchmesser in einem großen Intervall. Bei Durchmessern von weniger als etwa 20 m liegen große Flüssigkeitsspiegeländerungen im Bereich von mehreren Zentimetern und bei großen Durchmessern von mehr als etwa 45 m starke Volumenstromschwankungen im Bereich von mehreren 101/s vor. Die Auswirkungen dieser Schwankungen können neben der Höhenlage und Größe der Einleitöffnung auch durch die Form der Ausströmfläche der Einleitöffnung kompensiert werden. Bei großen Flüssigkeitsspiegelveränderungen haben sich im Bereich der Abwasserableitung Profile mit Ei-förmiger Querschnittsfläche und bei hohen Volumenströmen Profile mit Maul-förmiger Querschnittsfläche bewährt. Diese Profiltypen werden als vorteilhafte Weiterbildung der Vorrichtung vorzugsweise bei den entsprechenden Beckendurchmessern als Querschnittsfläche für die Einleitöffnung eingesetzt.

Im Folgenden wird die Erfindung anhand von zeichnerischen Darstellungen erläutert. Es zeigen:

Fig. 1a  Prinzipdarstellung der Einleiteinrichtung im Längsschnitt bei einer Position für kleine Flüssigkeits- oder Suspensionsvolumenströme,

Fig. 1b  Prinzipdarstellung der Einleiteinrichtung im Längsschnitt bei einer Position für große Flüssigkeits- oder Suspensionsvolumenströme,

Fig. 1c  Prinzipdarstellung der Einleiteinrichtung in der Draufsicht,

Fig. 2a  Prinzipdarstellung der Einleiteinrichtung mit zwei beweglichen Kammerteilen im Längsschnitt bei einer Position für kleine Flüssigkeits- oder Suspensionsvolumenströme,

Fig. 2b  Prinzipdarstellung der Einleiteinrichtung mit zwei beweglichen Kammerteilen im Längsschnitt bei einer Position für große Flüssigkeits- oder Suspensionsvolumenströme,

Fig. 3  Prinzipdarstellung der Einleiteinrichtung mit einer Kammer sowie einer beweglichen Klappe für unterschiedliche Abströmrichtungen sowie Einleitöffnungen (Querschnittsfläche, Höhenlage),

Fig. 4a  Prinzipdarstellung der Einleiteinrichtung mit einer Kammer mit einem Zellenrad und einer Öffnungsblende im Längsschnitt,

Fig. 4b  Prinzipdarstellung der Einleiteinrichtung mit einer Kammer mit einem Zellenrad und einer Öffnungsblende in der Vorderansicht,

Fig. 4c  Prinzipdarstellung der Einleiteinrichtung mit einer Kammer mit einem Zellenrad und einer Öffnungsblende im Schnitt,

Fig. 5a  Prinzipdarstellung der Einleiteinrichtung für ein rundes Becken oder einen runden Behälter mit einer zentralen Mischkammer in der Draufsicht,

Fig. 5b  Prinzipdarstellung der Einleiteinrichtung für ein rundes Becken oder einen runden Behälter mit einer zentralen Mischkammer in der Seitenansicht (teilgeschnitten),

Fig. 6a  Prinzipdarstellung der Einleiteinrichtung für ein rechteckiges Becken oder einen rechteckigen Behälter mit einer zweigeteilten Hülse zur Strömungsumlenkung im Längsschnitt,

Fig. 6b  Prinzipdarstellung der Einleiteinrichtung für ein rechteckiges Becken oder einen rechteckigen Behälter mit einer zweigeteilten Hülse zur Strömungsumlenkung in der Vorderansicht in der unteren Öffnungsposition,

Fig. 6c  Prinzipdarstellung der Einleiteinrichtung für ein rechteckiges Becken oder einen rechteckigen Behälter mit einer zweigeteilten Hülse zur Strömungsumlenkung in der Vorderansicht in der oberen Öffnungsposition,

**Fig. 7a**     Prinzipdarstellung der Einleitöffnung mit Maul-Profil in der untersten Öffnungsposition,

**Fig. 7b**     Prinzipdarstellung der Einleitöffnung mit Maul-Profil in der obersten Öffnungsposition,

**Fig. 7c**     Prinzipdarstellung der Einleitöffnung mit Ei-Profil in der untersten Öffnungsposition,

**Fig. 7d**     Prinzipdarstellung der Einleitöffnung mit Ei-Profil in der obersten Öffnungsposition,

**Fig. 8a**     im Querschnitt eine Gesamtansicht eines Absetzbeckens mit der mittig angeordneten Einleiteinrichtung in weiterer Ausgestaltung,

**Fig. 8b**     das Absetzbecken von Fig. 8a in Draufsicht,

**Fig. 9**     eine weitere Ausgestaltung einer Einleiteinrichtung in einem Absetzbecken im Querschnitt, und

**Fig. 10**     eine Teilquerschnittsansicht einer weiteren Ausgestaltung einer Einleiteinrichtung.

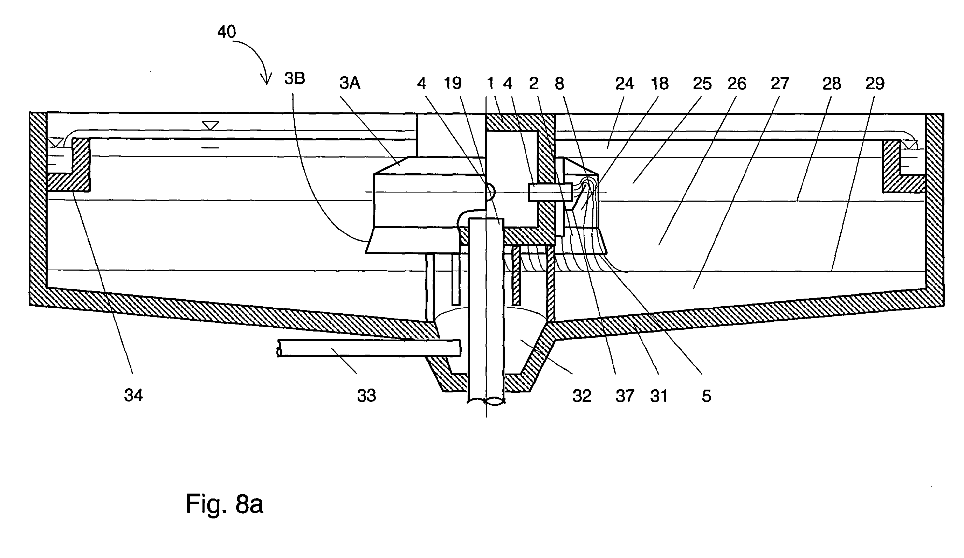

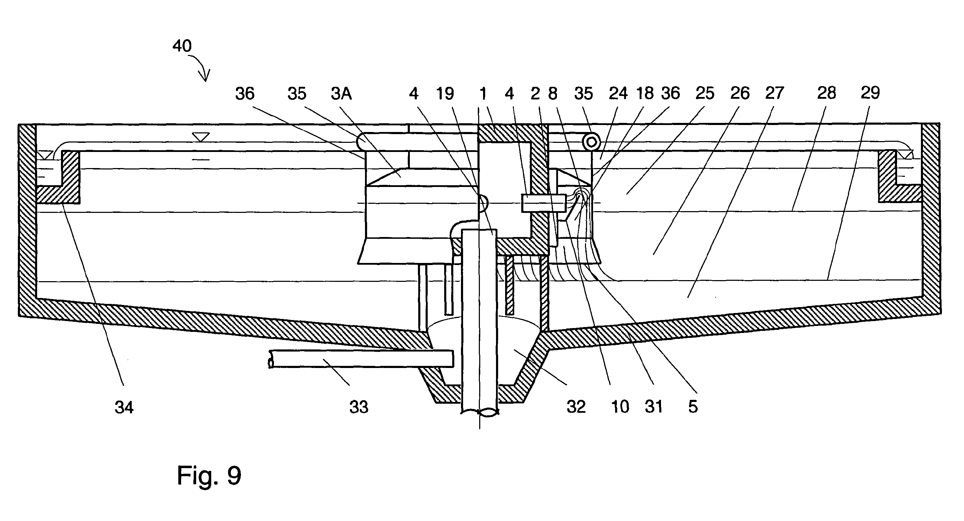

Ein typischer Aufbau eines Absetzbeckens 40 mit einer Einleiteinrichtung ist in den Fig. 8a und 9 dargestellt. Dort sind auch die Sedimentationszonen, die sich durch die Trennung der in das Absetzbecken 40 eingeleiteten Suspension ergeben, idealisiert wiedergegeben.

In den Figuren sind die Elemente nicht in jedem Fall in richtiger Maßrelation wiedergegeben und können zur Veranschaulichung vergrößert oder verkleinert sein. Gleiche oder gleichwirkende Elemente sind in den Figuren mit den gleichen Bezugszeichen versehen, auch wenn im Einzelnen die Ausgestaltungen der Elemente voneinander abweichen können.

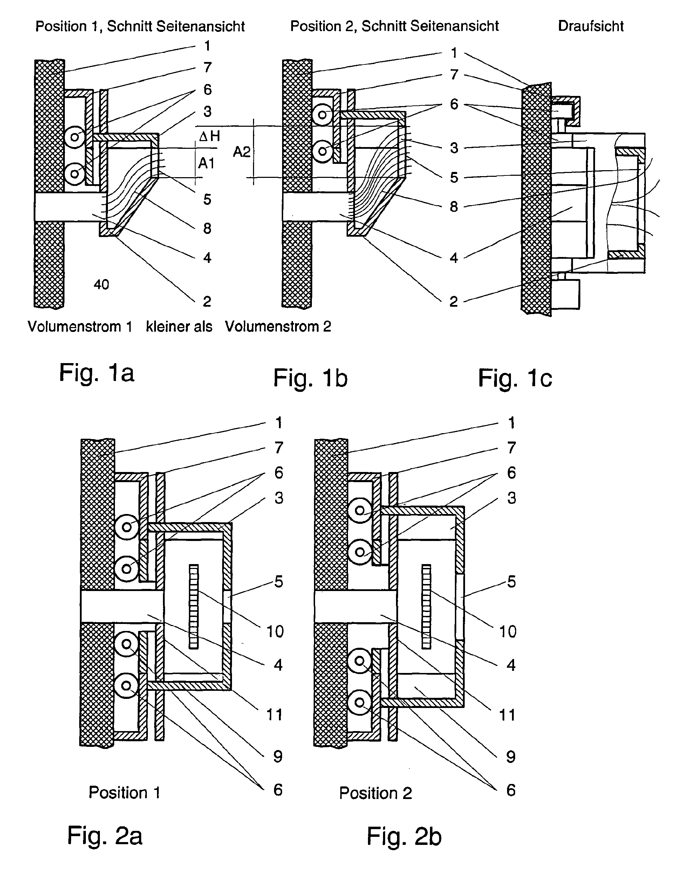

**Fig. 1a** zeigt den Längsschnitt einer Einleiteinrichtung bei einem kleinen Flüssigkeits- oder Suspensionsvolumenstrom durch die Einleiteinrichtung in das Absetzbecken 40. Die Einleiteinrichtung kann an einer Außenwand oder einer inneren Begrenzungswand des Absetzbeckens 40 angeordnet sein. Fig. 8a zeigt ein Beispiel, bei dem die Einleiteinrichtung als Ringkammer 3A um ein zentrales Mittelbauwerk 1A herum ausgebildet ist. Im Folgenden wird - soweit nicht anders angegeben - die Außen- oder Begrenzungswand des Absetzbeckens jedoch allgemein als Trennwand 1 bezeichnet.

Die in Fig. 1a dargestellte Einleiteinrichtung ist ausgebildet aus einem ortsfesten unteren Kammerteil 2, einem beweglichen Kammerteil 3, einer Auslassöffnung 5 (die bezüglich des Absetzbeckens 40 eine Einlassöffnung darstellt), einem Verfahrsystem 6 zum vertikalen Verfahren des beweglichen Kammerteils 3, und einer Führungstraverse 7. An der Führungstraverse 7 ist das Verfahrsystem 6 beweglich gelagert und geführt.

Über eine Zufuhröffnung 4, die in der Trennwand 1 im Zulaufbereich des Beckens oder Behälters angeordnet ist, wird die Flüssigkeit oder Suspension der Einleiteinrichtung zugeführt. Das untere Kammerteil 2 ist fest mit der Zufuhröffnung verbunden und dichtet das bewegliche obere Kammerteil 3 gegenüber der Flüssigkeit oder Suspension ab, d.h. das obere und untere Kammerteil bilden eine Kammer aus, die die weitgehend noch nicht entmischte Suspension durchströmt (siehe Stromfäden 8 der Suspension). Entsprechend hat das Fluid in der Kammer der Einleiteinrichtung die mittlere Dichte, die zwischen der Dichte des Wassers und des in der Suspension mitgeführten Schlamms liegt.

Das obere Kammerteil 3 ist mit dem Verfahrsystem 6 verbunden, welches sich in der Führungstraverse 7 in vertikaler Richtung bewegen kann. Der Durchtrittsquerschnitt bzw. die Austrittsfläche A der Einleitöffnung bzw. Auslassöffnung 5 wird durch die beiden Kammerteile 3, 5 begrenzt, so dass wenn das obere Kammerteil um ΔH verfährt, sich die Austrittfläche von A1 auf A2 vergrößert und sich dadurch ebenfalls der Flächenschwerpunkt der Einleitöffnung verändert. Damit ändert sich bei einer Austrittsflächenänderung auch die Höhenposition des Flächenmittelpunkts innerhalb des Absetzbeckens 40. Die Stromfäden 8 werden in der Einleitrichtung umgelenkt und verlassen diese durch die Einleitöffnung 5 in die umgebenden oder nachgeschalteten Becken 40 oder Behälter. Bei einer alternativen Ausgestaltung (vgl. Fig. 8a) ist der ortsfeste Kammerteil 2 zumindest teilweise an der Trennwand 1 oder am Boden des Absetzbeckens angeordnet.

Die **Fig. 1b** zeigt die Position der Einleiteinrichtung für einen größeren Volumenstrom der durch die Einleiteinrichtung strömenden Suspension, bei dem sich das obere Kammerteil 3 in vertikaler Richtung nach oben verschoben hat. Dadurch wird die Einleitöffnung 5 vergrößert und der Abstand der Stromfäden und damit die Strömungsenergie der zugeführten Flüssigkeit oder Suspension bleiben im Bereich der Einleitöffnung unverändert. D.h. unabhängig vom gesamten Suspensionsvolumenstrom bleibt über einen bestimmten Bereich der Volumenstromänderung die mittlere Strömungsdichte der Suspension durch die Auslassöffnung 5 konstant oder nahezu konstant. Wie unten weiter erläutert wird, wird mit zunehmendem Volumenstrom der Suspension der bewegliche Kammerteil 3 durch den Strömungsdruck der Suspension auf den beweglichen Kammerteil bewirkt durch die Umlenkung der Strömung am unteren Kammerteil 2 an der Schräge nach oben und die Umlenkung am oberen Kammerteil zur Auslassöffnung 5. Bei einer weiteren Ausgestaltung (vgl. Auftriebskörper in Fig. 9) wird das Aufsteigen des beweglichen Kammerteils 3 durch einen Schwimm- oder Auftriebskörper unterstützt, der durch den Anstieg des Flüssigkeitsniveaus im Absetzbecken 40 insgesamt aufgrund der erhöhten Suspensionszufuhr bewirkt wird. Mit abnehmendem Volumenstrom der Suspension erfolgt die Rückstellung des beweglichen Kammerteils 2 durch die Schwerkraft.

**In der Fig. 1c** ist in der Draufsicht die Führungstraverse 7 zu sehen, die über seitlich angeordnete Rollen eine Verfahrung des beweglichen oberen Kammerteils ermöglicht.

**Fig. 2a** zeigt eine ähnliche Konstruktion der Einleiteinrichtung im Längsschnitt wie die Fig 1a, jedoch sind hier zwei bewegliche Kammerteile 3, 9 angeordnet. Der zugeführte Flüssigkeits- bzw. Suspensionsvolumenstrom fließt auf eine Umlenk- und Verteilungsplatte 10, die diesen nach unten und oben aufteilt, so dass durch die Strömungsumlenkung innerhalb der Einleiteinrichtung sowohl das untere bewegliche Kammerteil 9 als auch das obere bewegliche Kammerteil 3 mit zunehmendem Volumenstrom auseinander gefahren werden. Die Umlenkplatte 10 ist ortsfest an der Zufuhröffnung 4 und/ oder an der Trennwand 1 gelagert. Wie im Fall von Fig. 1 kann das Auseinanderfahren der Kammerteile 3, 9 durch Schwimmkörper unterstützt werden. Vorzugsweise ist wie im Falle des oberen Ausführungsbeispiels nur der obere Kammerteil mit dem Schwimmer verbunden, so dass aufgrund der größeren Verstellkräfte am oberen Kammerteil 3 eine Verlagerung der mittleren Auslassöffnung 5 nach oben resultiert.

Bei abnehmendem Volumenstrom erfolgt die Rückstellung des oberen Kammerteils 2 durch Schwerkraft und des unteren Kammerteils 9 durch ein nicht dargestelltes Federelement, das eine Kraft zur Verschiebung nach oben aufbringt und das Kammerteil 9 bei nachlassendem Volumenstrom wieder anhebt.

Die **Fig. 2b** zeigt die Verfahrposition bei einem größeren Volumenstrom. Bei dieser Konstruktion ist besonders vorteilhaft, dass mit der gleichen Verfahrhöhe wie bei den Fig. 1 eine annähernd doppelt so große Öffnungsweite der Auslassöffnung 5 erzielt werden kann.

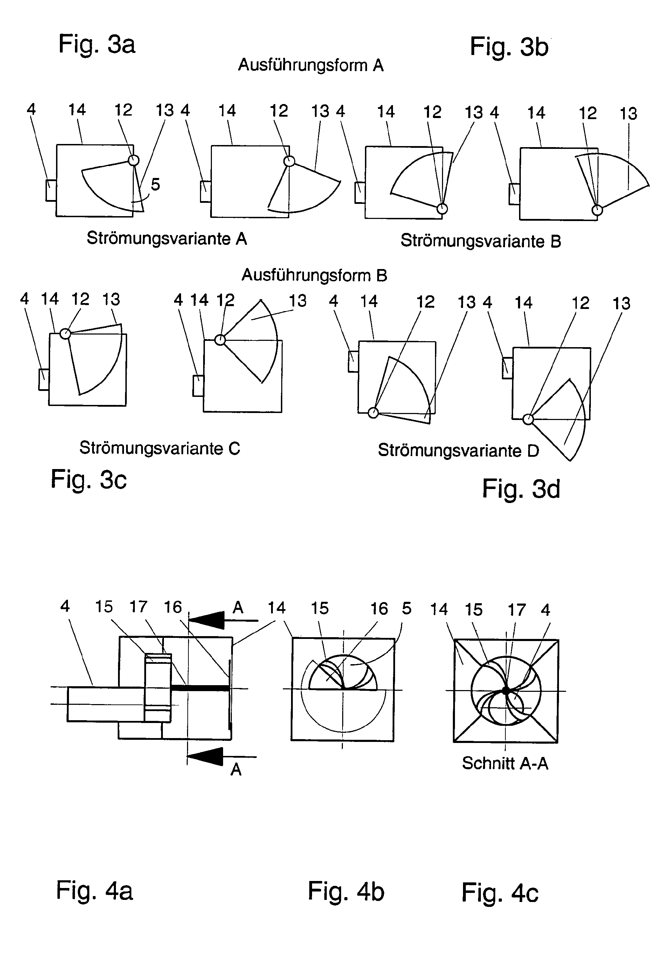

Die **Fig. 3** zeigt eine einfache Form der Einleiteinrichtung mit einer einteiligen Kammer 14 und einer Auslassöffnung 5, deren Austrittsquerschnitt mittels einer beweglichen Klappe 13 gesteuert wird. In die Einleiteinrichtung strömt die Suspension wiederum durch die Zufuhröffnung 4. Bei dieser Ausführung kann ebenfalls die Abströmrichtung der Flüssigkeit oder Suspension in das Becken 40 bzw. den Behälter beeinflusst werden. Die Klappe 13 weist eine Grundplatte auf, die an ihrer Seitenkante an einem Drehlager 12 schwenkbar gelagert ist. An den beiden an die Kante mit dem Drehlager 12 angrenzenden Seitenkanten sind Seitenplatten im rechten Winkel zur Grundplatte angeordnet. Die Seitenplatten halten die Auslassöffnung gegen ein seitliches Abströmen der Suspension geschlossen, unabhängig vom Auslenkungswinkel der Grundplatte relativ zur Auslassöffnung 5.

Wie in den jeweils linken Darstellungen der Strömungsvarianten A-C dargestellt, wird die Auslassöffnung 5 bei geringem oder nicht vorhandenem Volumenstrom nicht vollständig geschlossen, und ein Mindestöffnungsquerschnitt der Auslassöffnung 5 bleibt erhalten. Dies gilt auch für alle anderen beschriebenen Ausführungsbeispiele der Einleiteinrichtung. Bei allen Ausführungsvarianten der Fig. 3a-3d ist in der linken Abbildung die Klappenstellung für einen kleinen Volumenstrom dargestellt, und in der rechten Abbildung ist die Klappenstellung für einen größeren Volumenstrom dargestellt.

Die **Fig. 3a und 3b** zeigen je eine Ausführungsform mit einer Strömungsvariante A, bei der die Klappe 13 frontseitig schwenkbar gelagert ist. Durch die Aufhängung an der Oberseite der Klappe an dem oben vorhandenen Drehlager 12 im Falle von Fig. 3a wird die Strömungsrichtung in einem steilen Winkel zur Becken- oder Behältersohle umgelenkt. Die Auslenkung erfolgt mit zunehmendem Volumenstrom gegen die Schwerkraftrückstellung der Klappe 13.

Die Strömungsvariante B der Fig. 3b zeigt die Ausführung für eine Strömungsumlenkung unter einem steilen Winkel zur Oberfläche des Flüssigkeitsspiegels. Die Rückstellung der Klappe 13 erfolgt bei abnehmender Strömung durch ein nicht dargestelltes Federelement. Die Strömungsvarianten C und D der Fig. 3b und 3c führen bei der Strömungsumlenkung zu flacheren Winkeln bezüglich der Horizontalen, so dass die zugeführten Flüssigkeits- oder Suspensionsvolumenströme in das Becken 40 bzw. den Behälter sanfter eingeschichtet werden können, da ein geringerer Vertikalströmungsanteil der in das Becken 40 einströmenden Suspension vorliegt. Die Umlenkrichtung ist bei der Strömungsvariante C zur Oberfläche des Flüssigkeitsspiegels und bei der Variante D zur Sohle hin gerichtet.

Die **Fig. 4a** zeigt einen Längsschnitt durch eine Einleiteinrichtung mit einer Kombination aus einem Flügelrad bzw. Zellenrad 15 und einer Öffnungsblende 16. Die Öffnungsblende 16 ist hier drehbar hinter einer Frontplatte einer einteiligen Kammer 14 gelagert. Die Frontplatte hat eine halbkreisförmige Auslassöffnung 5 und die Blende 16 selbst ist ebenfalls halbkreisförmig. Wie in der Frontansicht von Fig. 4b dargestellt, ist die Blende 16 nur wenige Grad aus ihrer Grundstellung ausgelenkt und teilweise hinter der Auslassöffnung 5 zu erkennen. In der Grundstellung bei keinem oder nur geringem Volumenstrom gibt die untenliegende Blende 16 die Auslassöffnung 5 ganz frei.

Der zugeführte Volumenstrom strömt am turbinenartigen Flügelrad 15 vorbei, wodurch ein Drehmoment induziert wird, welches über einen Verdrehzapfen 17 an die Öffnungsblende 16 übertragen wird. Mit zunehmendem Volumenstrom wird das Flügelrad und damit die Blende ausgelenkt. Die Rückstellung entgegen das geringer werdende Drehmoment bei abnehmendem Volumenstrom erfolgt mittels eines nicht dargestellten Federelements, beispielsweise einer Schraubenfeder. Zusätzlich zur Winkelverstellung wird beim Durchströmen des Flügelrads der Flüssigkeit oder Suspension ein Drall aufgeprägt, der zu einer Vergrößerung der Stoffaustauschfläche und dadurch zu einer schnelleren Vergleichmäßigung zwischen der zugeführten und in dem umgebenden oder nachgeschalteten Becken oder Behälter befindlichen Flüssigkeit oder Suspension führt.

Die **Fig. 4b** zeigt die Vorderseite der Einleitöffnung mit der halbkreisförmigen Auslassöffnung 5, die durch die Blendenöffnung reguliert wird. In der **Fig. 4c** ist der Schnitt A-A zusehen, der die Anordnung der Zufuhröffnung 4 im Bereich des Flügelrades 15 darstellt.

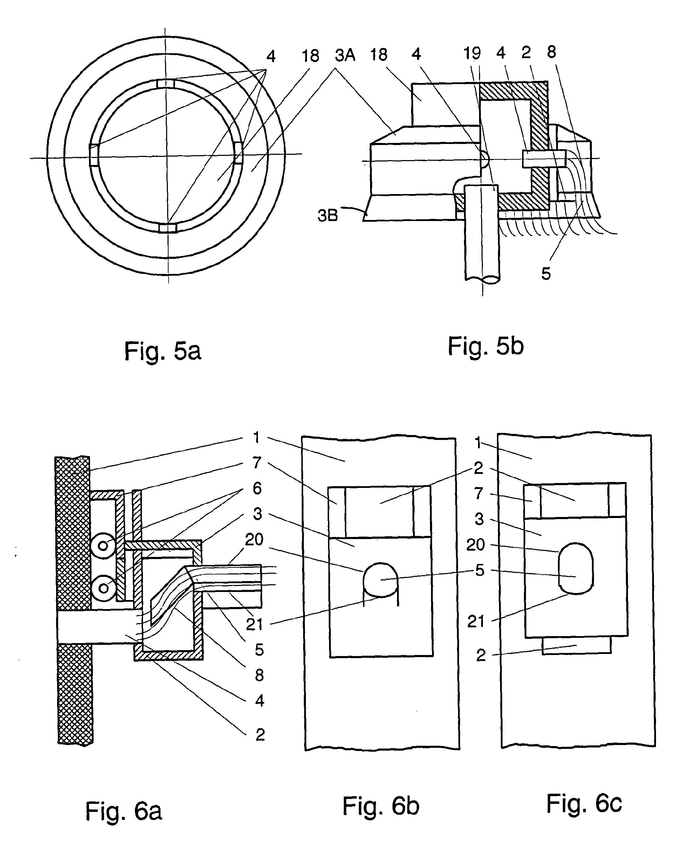

Die **Fig. 5a** und **5b** verdeutlichen die Draufsicht und die teilgeschnittene Seitenansicht einer zylindrischen bzw. ringförmigen Einleiteinrichtung für runde Absetzbecken 40 oder Behälter mit einer vorgeschalteten Mischkammer 18. Die feststehende Mischkammer 18 ist Bestandteil des Absetzbeckens 40 und kann auch als zentrales Mittenbauwerk bezeichnet werden. Der Flüssigkeits- bzw. Suspensionsvolumenstrom wird der Mischkammer 18 zentral über einen Düker bzw. eine Steigleitung 19 der Mischkammer zugeführt. In der **Fig. 5a** sind vier Zufuhröffnungen 4 durch die Trennwand 1 von der Mischkammer 18 in die Einleiteinrichtung führend zu sehen. Die vier Zufuhröffnungen 4 münden in die Ringkammer der Einleiteinrichtung, die durch das obere bewegliche Kammerteil 3A und das starr angeordnete untere Kammerteil 2 ausgebildet ist. Durch den ringförmigen Aufbau der Einleiteinrichtung können die Volumenteilströme aus den vier separaten Zufuhröffnungen 4 zu einem Gesamtvolumenstrom der Suspension zusammengefasst werden.

Das bewegliche Kammerteil 2 ist vertikal verschiebbar an der ortsfesten Mischkammer 18 gelagert. Die Strömungsenergie des zugeführten Volumenstromes führt zu einer Lageveränderung des oberen beweglichen Kammerteils 3A und dadurch wird die ringförmige, einen Ringspalt ausbildende Einleitöffnung 5 sowohl in ihrer Austrittsfläche als auch Höhenlage verändert. Durch die Schrägstellung der unteren Schürze 3B des Kammerteils 3A ändert sich beim Anheben des Kammerteils 3A der Abstand zum Außenrand des festen Kammerteils 2 und damit die Ringspaltbreite. Bei diesem Ausführungsbeispiel ist das bewegliche Kammerteil 3A aus einem (im Vergleich zu Metall) leichten Material ausgebildet, wie beispielsweise Kunststoff oder einem Verbundmaterial. Der Abtrieb des Kammerteils 3A in Wasser ist daher gering oder es ist sogar ein Auftrieb vorhanden, d.h. die mittlere Dichte des Kammerteils 3A liegt im Bereich 2 bis 0,7 $\rho_w$, wobei $\rho_w$ die Dichte von Wasser ist. Besonders vorteilhaft liegt die Dichte im Bereich von 1,5 bis 0,8 $\rho_w$ und besonders bevorzugt im Bereich von 1,3 bis 0,9 $\rho_w$. Mit zunehmendem Volumenstrom ergibt sich die Verschiebung des Kammerteils 3A durch ein Gleichgewicht von Schwerkraft und Auftrieb, wobei der Auftrieb hier zusammengesetzt ist aus dem (netto) Rückstoß der nach unten ausgelassenen Suspension, und dem Auftrieb durch die mittlere Dichte gemittelt aus der Dichte der Suspension in der Kammer der Einleiteinrichtung und der Dichte des Kammerteils 3A im Vergleich zur mittleren Dichte des die Kammer umgebenden Mediums. Dabei ist, wie in Fig. 8a dargestellt, die Dichte des die Kammer umgebenen Mediums geschichtet (idealisiert von oben Wasser/Suspension (Entmischungszone)/Schlamm) und die Höhenlage und/oder die Einzelhöhe der Schichtzonen im Absetzbecken 40 ändert sich mit dem Volumenstrom der Suspension (z.B. durch den Anstieg des oberen Wasserniveaus bei zunehmendem Volumenstrom der Suspension).

Die **Fig. 6a** zeigt den Längsschnitt durch die Einleiteinrichtung mit einer zweigeteilten Hülse 20, 21, deren bewegliches Hülsenteil 20 an dem oberen beweglichen Kammerteil 3 befestigt ist. Das ortsfeste Hülsenteil 21 ist am unteren, ortsfesten Kammerteil 2 angeordnet. Die Austrittsöffnung der Hülse 20, 21 bildet die Auslassöffnung 5 und die gebogene Form der Hülse begünstigt im Inneren der Kammer die Umlenkung des zugeführten Volumenstromes. Der horizontale Verlauf des Endabschnitts der Hülse führt zu einer horizontalen Einleitung der Suspension in das nachgeschaltete oder umgebende Becken 40 oder Behälter.

In den **Fig. 6b** und **6c** ist die Vorderansicht der Einleiteinrichtung mit der Hülse 20,21 für unterschiedliche Flüssigkeitsvolumenströme dargestellt. Die **Fig. 6b** zeigt den Umriss der Hülse bei einem kleinen Volumenstrom, wobei die seitlich nach unten geführte Seitenbegrenzung des beweglichen Hülsenteils 20 über den seitlichen Rand des ortsfesten Hülsenteils 21 hinabragt. In der Fig. 6c ist der maximale Volumenstrom erreicht, so dass die Ränder bzw. Längskanten der beiden Hülsenteile 20, 21 aneinandergrenzen und die Hülsenteile einen geschlossenen Körper, ähnlich einem Rohr, ausbilden. Auftrieb und Rückstellung des beweglichen Kammerteils 3 erfolgen wie bei den Ausführungsbeispielen der Fig. 1 oder 5.

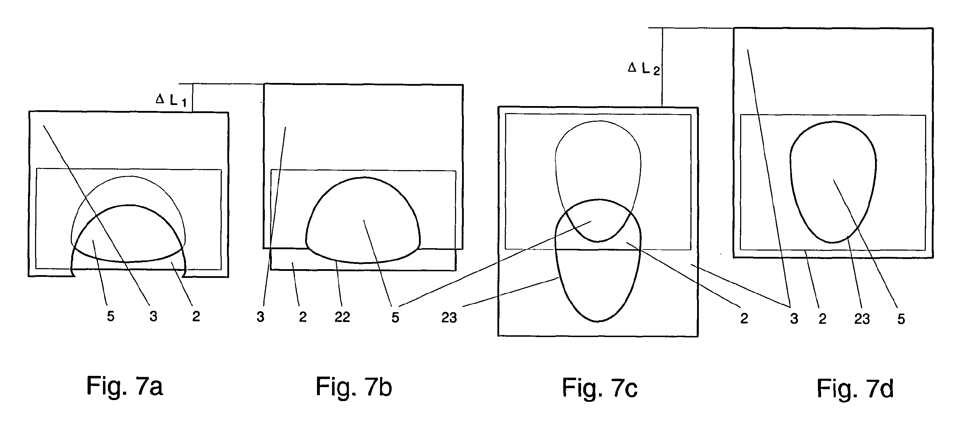

Die **Fig. 7a/7b** und **7c/7d** zeigen zwei besonders vorteilhafte Formen von Auslassöffnungen 5. Die Austrittsflächen der beiden Auslassöffnungen sind bei maximalem Volumenstrom etwa gleich groß **(Fig. 7b** und **Fig. 7d).** In den **Fig. 7a** und **7b** sind die Vorderansichten für ein Maul-Profil bei einem kleinen Volumenstrom (Fig. 7a) und beim maximalen Volumenstrom (Fig. 7b) dargestellt. Die Hubhöhe $\Delta L_1$ zur Erreichung der maximalen Austrittsfläche ist beim Ausführungsbeispiel der Fig. 7a/7b im Vergleich zum Ausführungsbeispiel der **Fig. 7c/7d** wesentlich kleiner ($\Delta L_1 < \Delta L_2$). In den Vorderansichten der **Fig. 7c** und **7d** sind die Auslassöffnungen 5 für ein Ei-Profil zu erkennen. Hier wird eine wesentlich größere -Hubhöhe $\Delta L_2$ benötigt, um den maximalen Volumenstrom in die Becken oder Behälter einzuleiten. Durch die unterschiedlichen Hubhöhen kann durch die Form der Auslassöffnung die Einleiteinrichtung optimal an die hydraulischen Randbedingungen im Becken oder Behälter angepasst werden. Bei geringen Höhenstandsänderungen des Flüssigkeitsspiegels und großen Volumenströmen eignet sich besonders das Maul-Profil, um die Strömungsenergie möglichst schonend in das Becken oder den Behälter einzutragen. Für kleine Volumenströme und große Höhenstandsänderungen des Flüssigkeitsspiegels ist das Ei-Profil als Form der Auslassöffnung vorzuziehen. Die dargestellten Querschnitte der Auslassöffnungen sind beispielsweise sowohl bei den Ausführungsbeispielen der **Fig. 1, 2** oder **6** anwendbar.

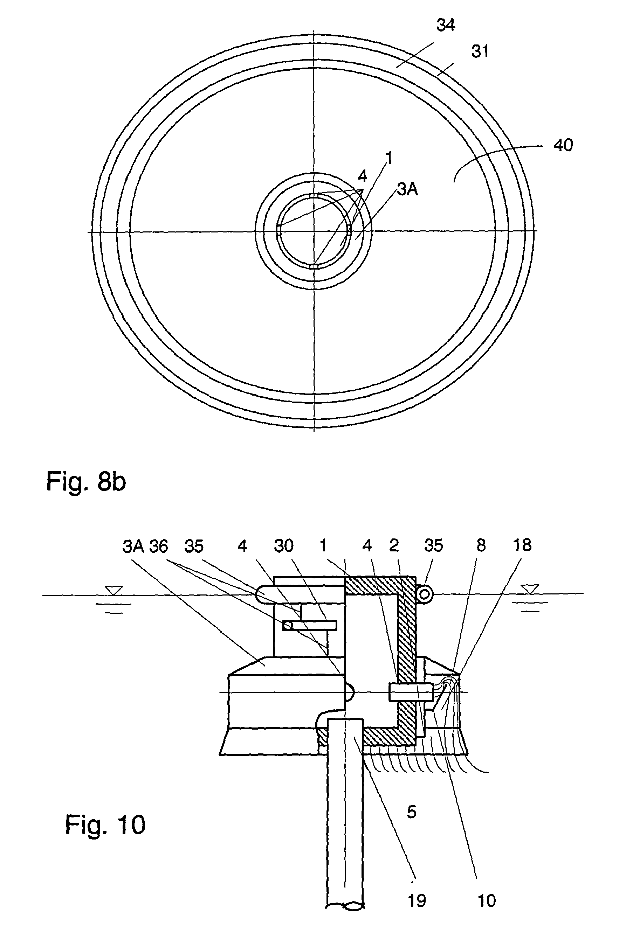

**Die Fig 8a und 8b** zeigen die teilgeschnittene Seitenansicht und die Draufsicht eines kreisförmigen Sedimentationsbeckens bzw. Absetzbeckens 40 mit der Trennwand 1 eines Mittenbauwerks, an dem die Einleiteinrichtung angeordnet ist. Das dargestellte Becken ist rund und der Einleiteinrichtung ist eine Mischkammer 18 nachgeschaltet. Der Flüssigkeits- bzw. Suspensionsvolumenstrom wird zentral über eine Steigleitung bzw. einen Düker 19 dem Mittelbauwerk zugeführt. In der Fig. 8a sind die vier Zufuhröffnungen 4 aus dem Mittelbauwerk in die Einleiteinrichtung zu sehen. Die vier Zufuhröffnungen münden in die Ringkammer aus beweglichem Kammerteil 3A und festem Kammerteil 2. Zur Wirkungsweise der Einleiteinrichtung wird auf obige Ausführungen zu der sehr ähnlichen Anordnung von **Fig. 5** verwiesen.

In **Fig. 8a** sind die Sedimentationszonen durch den Sedimentationsvorgang idealisiert dargestellt (idealisiert in dem Sinne, dass in der Praxis keine scharfen Grenzzonen vorhanden sind, sondern eher kontinuierliche Dichte- bzw. Zusammensetzungsübergänge in der Vertikalen und strömungsbedingte Vertikalabweichungen in radialer Richtung). In dem Sedimentationsbecken bilden sich unter ungestörten Randbedingungen vier Zonen aus. Betrachtet man die Zonen von unten nach oben, so ist auf dem Boden des Beckens oder Behälters die Schlammzone 27 vorhanden. In der höheren Schichtung findet man in den Becken die Trennzone 26, die bei starken Flüssigkeitszuflüssen durch eine Speicherzone 25 überlagert wird. Am Ende der Trennung der Sedimentation bildet sich die Klarwasserzone 24 aus. Durch die kontinuierlich betriebenen Becken wird die abgetrennte, geklärte Flüssigkeit über eine Klarwasserabzugsleitung 34 aus dem Becken abgezogen und durch eine Verbindung zum nächsten Gewässer ausgetragen. Zwischen der Schlamm- und Trennzone 26, 27 bildet sich eine Grenzschicht aus, die als Schlammspiegel 29 bezeichnet wird. Aufgrund der Dichtedifferenz zwischen der Trenn- und der Speicherzone ist dort ebenfalls eine Grenzschicht vorhanden, der sogenannte Trennspiegel 28.

Der Schlamm in dem Sedimentationsbecken 40 wird durch zusätzliche mechanische Einbauten (nicht dargestellte Räumvorrichtung am Behälterboden 31) in den Schlammtrichter 32 transportiert und über eine Schlammabzugsleitung 33 in die vorgeschalteten Reinigungsbecken überführt. Das Mittenbauwerk steht auf Säulen auf dem Behälterboden 31.

**Fig. 8b** zeigt in der Draufsicht noch einmal die zentrische Anordnung der ringförmigen Trennwand 1 des Mittelbauwerks und die vier Zufuhröffnungen 4 zur umlaufenden Kammer, die hier gebildet wird aus dem ringförmigen, vertikal verschiebbaren Kammerteil 3A und einem an der Trennwand 1 angeordneten Umlenksims 37. Der Umlenksims 37 lenkt die zuströmende Suspension nach oben gegen das Kammerteil 3A und bildet den unteren, ortsfesten Kammerteil 2. Die Auslassöffnung 5 ist zwischen dem Rand der Schürze 3B und der Außenseite der Trennwand 1 ausgebildet, wobei sich deren Höhenlage im Becken 40 durch das Anheben des Kammerteils 3A ändert.

Bei einer weiteren, nicht dargestellten Ausgestaltung ist die Kammer in mehrere Kammersegmente unterteilt, wobei durch jedes der Kammersegmente eine Suspensionsströmung fließt, indem die Suspension durch zumindest eine Zufuhröffnung 4 in das Segment zuströmt und durch zumindest eine Auslassöffnung ausströmt. Die Ausströmrichtungen (Horizontalanteil oder Vertikalanteil nach unten/oben) aus den einzelnen Segmenten können voneinander abweichen. Auch kann anstelle der in Fig. 8 dargestellten Ringform der Einlaufeinrichtung eine ovale, elliptische, quadratische, rechteckige lineare, teilbogenförmige, L-förmige oder U-förmige Form zum Einsatz kommen. Anstelle der Anordnung am Mittenbauwerk (innere Trennwand 1) kann auch eine Anordnung der Einleiteinrichtung an einer Außenwand des Beckens 40 vorgesehen sein. Oder die Einleiteinrichtung wird beabstandet zu der Trennwand 1 oder der Außenwand angeordnet, beispielsweise durch eine Verlängerung der Zuführöffnung von der Trennwand oder Außenwand ins Becken hinein.

**Fig. 9** zeigt eine weitere Ausgestaltung der Einleiteinrichtung, bei der im Vergleich zu den Ausführungsbeispielen der Fig. 8 und 5 eine zusätzliche auftriebsbetätigte Verstellung des beweglichen Kammerteils 3A vorgesehen ist. Der Auftrieb zur Verstellung wird zusätzlich oder ergänzend durch einen ringförmigen Auftriebskörper 35 bewirkt, der mit dem Kammerteil 3A über zumindest ein Kraftübertragungselement 36 verbunden ist und auf oder an der Flüssigkeitsoberfläche schwimmt. Mit zunehmendem Flüssigkeitsstrom verändert sich die Lage des Flüssigkeitsspiegels und damit die Höhenlage des Auftriebskörpers 35 im Becken 40. Mit dem Ansteigen oder Abfallen des Flüssigkeitsniveaus wird das Kammerteil 3A angehoben oder abgesenkt, wobei die Höhenveränderung des Kammerteils 3A ausschließlich mittels des Auftriebskörpers 35 erfolgt oder in Ergänzung zur Höhenverstellung des Kammerteils 3A durch die aus der Auslassöffnung 5 strömenden Suspension und/oder den Auf- oder Abtrieb der Einlasseinrichtung (als Schwebesystem betrachtet). Entsprechende Erläuterungen zu den auf die Einleiteinrichtung wirkenden Auf- und Abtriebskräfte wurden bereits oben zum Ausführungsbeispiel der **Fig. 5** gemacht.

Sind die durch den Auftriebskörper 35 bewirkten Höhenlagenänderungen im Vergleich zu den erforderlichen Änderungen zum Verstellen der mindestens einen beweglichen Kammer 3A zu klein oder zu groß, können diese wie in **Fig. 10** dargestellt, durch ein Hubübersetzungs- bzw. -untersetzungselement angepasst werden. Durch dieses Element ist eine spezifische, auf den jeweiligen Anwendungsfall bezogene Anpassung der Steuerungscharakteristik möglich.

Bei einer nicht dargestellten Ausführung der Einleiteinrichtung oder der der Einleiteinrichtung nachgeschalteten Mischkammer 18 wird der Suspensionsstrom mehrfach umgelenkt und/oder mäanderförmig geführt, so dass die Suspension vor dem Einleiten in das Absetzbecken 40 oder den Behälter durchmischt und homogenisiert wird. Die Homogenisierung betrifft hier die Zusammensetzung und die Temperatur der Suspension.

Bei der Erfindung ergibt sich eine Minimierung der Dichte- und Zirkulationsvolumenströme und damit eine Reduzierung der Oberflächenbeschickung AO auf das Maß des zugeführten Beschickungsvolumenstroms $\dot{Q}$, wobei die Steuerung selbsttätig, kostengünstig und effizient ausgeführt wird. Auch wird die Leistungsfähigkeit der Sedimentationsbeckens durch die Anordnung der Einleitvorrichtung erhöht.

**Bezugszeichenliste**

| | |
|---|---|
| 1 | Trennwand (Einlauf- bzw. Mittenbauwerk) |
| 2 | Unterer Kammerteil, fest |
| 3 | Oberer Kammerteil, beweglich |
| 3A | Ringkammer |
| 3B | Schürze |
| 4 | Zufuhröffnung |
| **5** | **Auslassöffnung** |
| 6 | Verfahrsystem für das bewegliche Kammerteil |
| 7 | Führungstraverse für Verfahrung |
| 8 | Strömungsfäden der Flüssigkeit oder Suspension |
| 9 | Unterer Kammerteil, beweglich |
| 10 | Umlenk- und Verteilungsplatte |
| 11 | Abschlussplatte |
| 12 | Drehlager |
| 13 | Bewegliche Klappe |
| 14 | Einteilige Kammer |
| 15 | Zellenrad |
| 16 | Öffnungsblende |
| 17 | Verdrehzapfen |
| 18 | Mischkammer |
| 19 | Steigleitung |
| 20 | bewegliches Hülsenteil |
| **21** | **starres Hülsenteil** |
| 22 | Maul-Profil |
| 23 | Ei-Profil |
| 24 | Klarwasserzone |
| 25 | Speicherzone |
| 26 | Trennzone |
| 27 | Schlammzone |
| 28 | Trennspiegel |
| 29 | Schlammspiegel |
| 30 | Hubübersetzung bzw. -untersetzungselement |
| 31 | Behälterboden |
| 32 | Schlammtrichter |
| 33 | Schlammabzugsleitung |
| 34 | Klarwasserabzugsleitung |
| 35 | Auftriebskörper |
| 36 | Kraftübertragungselement |
| 37 | Umlenksims |
| 38 | Säulen |

40    Absetzbecken

**Patentansprüche**

1. Absetzbecken (40) für eine Suspension, insbesondere Belebt- und / oder Klärschlamm, mit
   zumindest eine Einleiteinrichtung (2-5) zum Einleiten der zu trennenden Suspension;
   zumindest einer Auslassöffnung (5) der zumindest einen Einleiteinrichtung (2-5), wobei die Höhe (H) der Auslassöffnung im Absetzbecken (40) verstellbar ist und/oder der Austrittsquerschnitt (A1, A2) der Auslassöffnung verstellbar ist; und
   zumindest einer Verstelleinrichtung (3, 6; 3A; 13; 16; 3A, 35, 36) zur Veränderung der Höhe der Auslassöffnung (5) im Absetzbecken (40) und/oder des Austrittsquerschnitts der Auslassöffnung (5);
   **dadurch gekennzeichnet, dass**
   die Betätigung der Verstelleinrichtung (3, 6; 3A; 13; 16; 3A, 35, 36) mittels der in das Absatzbecken (40) zuströmenden Suspension erfolgt und/oder die Verstelleinrichtung auftrieb- und/oder abtriebbetätigbar ist.

2. Absetzbecken nach Anspruch 1, wobei die zumindest eine Einleiteinrichtung (2-5) zumindest zweiteilig ausgebildet ist, wobei zumindest ein Teilelement (3, 3A, 9) beweglich gelagert ist und/oder zumindest ein Teilelement relativ beweglich gegenüber den anderen Teilelementen (2) gelagert ist, wobei insbesondere die bewegliche Lagerung eine frei bewegliche und/oder verschiebbare Lagerung ist.

3. Absetzbecken nach Anspruch 1 oder 2, wobei die zumindest eine Verstelleinrichtung (3, 6; 3A; 13; 16; 3A, 35, 36) Teil der zumindest einen Einleiteinrichtung (2-5) ist.

4. Absetzbecken nach Anspruch 1, 2 oder 3, wobei die zumindest eine Verstelleinrichtung (3, 6; 3A; 13; 16; 3A, 35, 36) zumindest eine Umlenkeinrichtung (10, 20) zum Umlenken der Strömungsrichtung der zulaufenden Suspension aufweist, wobei insbesondere die Umlenkeinrichtung (20) an einem verschiebbar gelagerten Teilelement (3A) der Einleiteinrichtung (2-5) angeordnet ist und/oder ein integrales Teilelement der Einleiteinrichtung ist.

5. Absetzbecken nach einem der vorhergehenden Ansprüche, wobei die zumindest eine Verstelleinrichtung (16) eine Drehmomentumsetzeinrichtung (15, 17) aufweist, mit der ein Teil des Strömungsdrucks der zuströmenden Suspension in ein Drehmoment umsetzbar ist zur Betätigung der Verstelleinrichtung.

6. Absetzbecken nach einem der vorhergehenden Ansprüche, wobei zumindest ein Teilelement (3) der zumindest einen Einleiteinrichtung (2-5) beweglich gelagert ist, insbesondere mit einem Vertikalbewegungsanteil, und wobei die mittlere Dichte des zumindest einen beweglich gelagerten Teilelements zwischen der Dichte der aus der Suspension getrennten Flüssigkeit und der aus der Suspension getrennten Feststoffe liegt.

7. Absetzbecken nach einem der vorhergehenden Ansprüche, wobei die zumindest eine Einleiteinrichtung (2-5) eine Kammer oder ein Behältnis zum temporären Aufnehmen der zuströmenden Suspension ausbildet, wobei zumindest ein Teilelement (3, 3A, 9) der Kammer oder des Behältnisses beweglich gelagert ist, insbesondere frei beweglich gelagert ist, und wobei zumindest das bewegliche Teilelement (3, 3A, 9) an der von der zuströmenden Suspension abgewandten Seite von dem im Absetzbecken (40) gefassten Material (24, 25, 26, 27) umgeben ist und/ oder zumindest teilweise unterhalb des Flüssigkeitsniveaus im Absetzbecken liegt.

8. Absetzbecken nach einem der vorhergehenden Ansprüche, wobei die zumindest eine Verstelleinrichtung (3, 6; 3A; 13; 16; 3A, 35, 36) eine Schwimmer- und/oder Verdrängereinrichtung (35) aufweist, mittels der eine Auftriebskraft und/oder Abtriebskraft auf die Einleiteinrichtung (2-5) zur Verstellung der zumindest einen Auslassöffnung ausübbar ist.

9. Absetzbecken nach Anspruch 8, wobei die Schwimmer- und/oder Verdrängereinrichtung (35) zumindest teilweise auf der Oberfläche der Flüssigkeit im Absetzbecken (40) aufschwimmt.

10. Absetzbecken nach Anspruch 8 oder 9, wobei die Schwimmer- und/oder Verdrängereinrichtung (35) im Absetzbecken (40), in einer dem Absetzbecken vorgeschalteten Zulaufeinrichtung (18, 19) und/oder in einer dem Absetzbecken nachgeschalteten Ablaufeinrichtung (34) angeordnet ist.

11. Absetzbecken nach einem der vorhergehenden Ansprüche, wobei mittels der zumindest einen Verstelleinrichtung (2-5) die Höhe der zumindest einen Auslassöffnung (5) im Absetzbecken (40) in einem Bereich zwischen der Klarwasserzone (24) und der Schlammzone (27), zwischen der Klarwasserzone (24) und der Trennzone (26), oder zwischen der Speicherzone (25) und der Schlammzone (27) einstellbar ist, bevorzugt im Bereich der Trennzone, besonders bevorzugt im unteren Bereich der Trennzone.

12. Absetzbecken nach einem der vorhergehenden Ansprüche, wobei die Auslassöffnung (5) mit veränderbarem Auslassquerschnitt zwischen einem ortsfesten Teil einer Kammer (2, 10) und einem beweglichen Teil der Kammer (3, 3A, 9) ausgebildet ist, wobei insbesondere die Auslassöffnung ein Spalt mit veränderbarer Spaltbreite ist.

13. Absetzbecken nach einem der vorhergehenden Ansprüche, wobei die Kammer (3, 3A, 4) zumindest teilweise unter die Oberfläche der Flüssigkeit untergetaucht ist und in dem umgebenden Material, das in dem Absetzbecken (40) gefasst ist, einen Schwebekörper ausbildet, dessen Höhe zumindest teilweise von der Dichteverteilung über die Höhe des Materials im Absetzbecken abhängt.

14. Absetzbecken nach einem der vorhergehenden Ansprüche, wobei die mittlere Dichte des Schwebekörpers zwischen der Dichte der aus der Suspension getrennten Flüssigkeit und der aus der Suspension getrennten Feststoffe liegt, insbesondere das 1,1 bis 1,8-fache der Dichte von Wasser.

15. Absetzbecken nach einem der vorhergehenden Ansprüche, wobei zumindest ein Teil der Verstelleinrichtung (3, 6; 3A; 13; 16; 3A, 35, 36) mit dem beweglichen Teil der Einleiteinrichtung über eine Übersetzungs- oder Untersetzungseinrichtung verbunden oder gekoppelt ist.

16. Absetzbecken nach einem der vorhergehenden Ansprüche, wobei die zumindest eine Verstelleinrichtung eine der zumindest einen Auslassöffnung zugeordnete Blende (16) aufweist, insbesondere eine in Abhängigkeit der zuströmenden Suspensionsmenge verstellbare Blende aufweist.

17. Absetzbecken nach einem der vorhergehenden Ansprüche, wobei der Einleiteinrichtung (2-5) eine Mischkammer (1) vor- und/oder nachgeschaltet ist, insbesondere ein zentrales Mittelbauwerk.

18. Absetzbecken nach Anspruch 17, wobei die Mischkammer (1) in die Einleiteinrichtung (2-5) integriert ist.

19. Absetzbecken nach Anspruch 17 oder 18, wobei die Mischkammer (1) in mehrere vertikale und oder horizontale Führungssegmente unterteilt ist, die so zueinander angeordnet sind, dass sich eine mäanderförmige Durchströmung der Mischkammer mit der Flüssigkeit oder Suspension ergibt.

20. Absetzbecken nach einem der vorhergehenden Ansprüche, wobei die Einleiteinrichtung (2-5) aus einem Kompositmaterial aufgebaut ist, insbesondere aus einer metallischen Außenhaut mit einer Kunststoff-Innenhaut, dessen mittlere Dichte kleiner oder gleich der umgebenden Flüssigkeits- bzw. Suspensionsdichte ist und/oder dessen Oberflächen mit einer biozid wirkenden Substanz und/oder adhäsionsvermindernden Substanz beschichtet und/oder dotiert ist.

21. Absetzbecken nach einem der vorhergehenden Ansprüche, wobei das Querschnittsprofil der Auslassöffnung kreisförmig, maulförmig, eiförmig, elliptisch oder quadratisch ist.

22. Absetzbecken nach einem der vorhergehenden Ansprüche, wobei die mittlere Materialdichte (35) zumindest eines Teils der Einleiteinrichtung (2-5), insbesondere des zumindest einen beweglich gelagerten Teilelements, kleiner oder gleich der umgebenden Flüssigkeits- bzw. Suspensionsdichte ist, insbesondere kleiner gleich 1.000 kg/m$^2$.

23. Absetzbecken nach einem der vorhergehenden Ansprüche, wobei die Höhenverstellung und/oder Verstellung des Austrittsquerschnitts der Auslassöffnung (5)
in die eine Richtung durch die Betätigung der Verstelleinrichtung (3, 6; 3A; 13; 16; 3A, 35, 36) erfolgt, und
in die Gegenrichtung durch die Schwerkraftwirkung auf die Verstelleinrichtung und/oder die Einleiteinrichtung und/oder durch zumindest ein Federelement erfolgt.

24. Absetzbecken nach einem der vorhergehenden Ansprüche, wobei die Einleiteinrichtung (2-5) zumindest ein Strömungsleitelement aufweist, das zumindest einen Teil der in das Absetzbecken zuströmenden Suspension horizontal durch die zumindest eine Auslassöffnung ausleitet und/oder im Mittel über die in das Absetzbecken zuströmende Suspension eine Abwärtsströmung erzeugt.

25. Absetzbecken nach einem der vorhergehenden Ansprüche, wobei die zumindest eine Einleiteinrichtung (2-5) eine umlaufende Kammer oder eine segmentweise umlaufende Kammer ausbildet, insbesondere eine Ringkammer (3A) ausbildet.

26. Absetzbecken nach Anspruch 4, wobei die zumindest eine Umlenkeinrichtung an einem fest installierten Teilelement (2) der Einleiteinrichtung oder im Absetzbecken fest installiert ist und die Suspensionsströmung auf ein beweglich gelagertes Teilelement (3, 3A, 9) der Einleiteinrichtung leitet und/oder die zumindest eine Umlenkeinrichtung an einem beweglich gelagerten Teilelement der Einleiteinrichtung angeordnet ist und die Suspensionsströmung auf ein fest installiertes Teilelement der Einleiteinrichtung oder durch die zumindest eine Auslassöffnung leitet.

27. Verfahren zur Einstellung des Austrittsquerschnitts (A1, A2) und/oder der Höhe (H) einer Auslassöffnung (5) einer Einleiteinrichtung (2-5) in einem Absetzbecken (40) zur Separierung einer durch die Einleiteinrichtung in das Absetzbecken eingeleiteten Suspension, insbesondere bei einem Absetzbecken (40) gemäß einem der vorhergehenden Ansprüche, wobei die Einstellung des Austrittsquerschnitts und/oder der Höhe **dadurch** erfolgt, dass
die Höhenlage zumindest eines beweglich gelagerten Teilelements (3, 3A) der Einleiteinrichtung durch Auftrieb und/oder Abtrieb des zumindest einen Teilelements und/oder einer auf das zumindest eine Teilelement wirkenden Verstelleinrichtung **dadurch** verändert wird, dass sich das Flüssigkeitsniveau der obersten Flüssigkeitsschicht im Absetzbecken ändert und/oder dass sich die Dichteverteilung der sich aus der Separierung der Suspension im Absetzbecken ergebenden Schichtung ändert und/oder sich die mittlere Dichte der eingeleiteten Suspension ändert; und/oder
der Strömungsimpuls oder der Strömungsdruck der Suspension so auf das zumindest eine bewegliche Teilelement wirkt, dass eine Änderung der Strömung der Suspension eine Änderung der Höhe und/oder des Austrittsquerschnitts bewirkt.

Position 1, Schnitt Seitenansicht    Position 2, Schnitt Seitenansicht    Draufsicht

Volumenstrom 1  kleiner als  Volumenstrom 2

## Fig. 1a          Fig. 1b          Fig. 1c

Position 1          Position 2

## Fig. 2a          Fig. 2b

# Fig. 3a

Ausführungsform A

# Fig. 3b

Strömungsvariante A

Strömungsvariante B

Ausführungsform B

Strömungsvariante C

# Fig. 3c

Strömungsvariante D

# Fig. 3d

Schnitt A-A

# Fig. 4a

# Fig. 4b

# Fig. 4c

Fig. 5a

Fig. 5b

Fig. 6a

Fig. 6b

Fig. 6c

$\Delta L_1$

$\Delta L_2$

5 3 2

3 2 22 5

23

2 3 2 23 5

Fig. 7a          Fig. 7b          Fig. 7c          Fig. 7d

Fig. 8a

Fig. 8b

Fig. 10

Fig. 9

**Europäisches Patentamt**

**EUROPÄISCHER RECHERCHENBERICHT**

Nummer der Anmeldung

EP 07 01 1098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 651 615 A (KELLY EARL M ET AL) 8. September 1953 (1953-09-08) * Spalte 5, Zeile 70 - Spalte 6, Zeile 5 * * Spalte 6, Zeile 42 - Zeile 59; Abbildung 2 * | 1-27 | INV. B01D21/24 G05D7/01 |
| X | DE 705 354 C (WILLY BULLE) 25. April 1941 (1941-04-25) * Seite 1, Zeile 60 - Seite 2, Zeile 14 * | 1-27 | |
| X | JP 56 163705 A (HITACHI CONSTRUCTION MACHINERY) 16. Dezember 1981 (1981-12-16) * Zusammenfassung * | 1-27 | |
| X | US 2 267 516 A (ADAMS HENRY F) 23. Dezember 1941 (1941-12-23) * Seite 1, rechte Spalte, Zeile 29 - Seite 2, linke Spalte, Zeile 14 * * Seite 2, linke Spalte, Zeile 63 - rechte Spalte, Zeile 2; Abbildungen 1,5,6 * | 1-27 | |
| X | WO 97/05338 A (UNIV SWINBURNE [AU]; PHILLIPS DONALD IAN [AU]) 13. Februar 1997 (1997-02-13) * Seite 4, Zeile 23 - Seite 12, Zeile 13; Abbildungen 17-19 * | 1-27 | RECHERCHIERTE SACHGEBIETE (IPC) B01D G05D C02F |
| X | US 3 926 805 A (WALKER JAMES DONALD) 16. Dezember 1975 (1975-12-16) * Spalte 2, Zeile 4 - Spalte 3, Zeile 18 * * Spalte 3, Zeile 28 - Zeile 56 * * Spalte 9, Zeile 22 - Zeile 27 * * Abbildungen 1-9 * | 1-27 | |
| X | DE 199 50 733 C1 (BOTSCH BERTRAM [DE]) 23. Mai 2001 (2001-05-23) * Anspruch 1; Abbildung 1 * | 1-27 | |

Der vorliegende Recherchenbericht wurde für alle Patentansprüche erstellt

| Recherchenort | Abschlußdatum der Recherche | Prüfer |
|---|---|---|
| München | 20. September 2007 | Roider, Josef |

EPO FORM 1503 03.82 (P04C03)

**Europäisches
Patentamt**

Nummer der Anmeldung

EP 07 01 1098

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**MANGELNDE EINHEITLICHKEIT DER ERFINDUNG ERGÄNZUNGSBLATT B**

Nummer der Anmeldung

EP 07 01 1098

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1(teilweise), 2-27 (entsprechend)

   Der Gegenstand der Gruppe I ist auf eine verstellbare Höhe der Auslassöffnung gerichtet, wobei die Verstelleinrichtung durch die zuströmende Suspension betätigbar ist.

1.1. Ansprüche: 1 (teilweise), 2-27 (entsprechend)

   Der Gegenstand der Gruppe II ist auf eine verstellbare Höhe der Auslassöffnung gerichtet, wobei die Verstelleinrichtung auftrieb- und/oder abtriebbetätigbar ist.

1.2. Ansprüche: 1 (teilweise), 2-27 (entsprechend)

   Der Gegenstand der Gruppe III ist auf einen verstellbaren Austrittsquerschnitt der Auslassöffnung gerichtet, wobei die Verstelleinrichtung durch die zuströmende Suspension betätigbar ist.

1.3. Ansprüche: 1 (teilweise), 2-27 (entsprechend)

   Der Gegenstand der Gruppe IV ist auf einen verstellbaren Austrittsquerschnitt der Auslassöffnung gerichtet, wobei die Verstelleinrichtung auftrieb- und/oder abtriebbetätigbar ist.

   ---

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

**EP 1 864 707 A1**

**ANHANG ZUM EUROPÄISCHEN RECHERCHENBERICHT**
**ÜBER DIE EUROPÄISCHE PATENTANMELDUNG NR.**

EP 07 01 1098

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2007

| Im Recherchenbericht angeführtes Patentdokument | Datum der Veröffentlichung | Mitglied(er) der Patentfamilie | Datum der Veröffentlichung |
|---|---|---|---|
| US 2651615 A | 08-09-1953 | KEINE | |
| DE 705354 C | 25-04-1941 | KEINE | |
| JP 56163705 A | 16-12-1981 | KEINE | |
| US 2267516 A | 23-12-1941 | KEINE | |
| WO 9705338 A | 13-02-1997 | GB 2318308 A<br>JP 11510092 T<br>NZ 313104 A<br>US 6183633 B1 | 22-04-1998<br>07-09-1999<br>29-11-1999<br>06-02-2001 |
| US 3926805 A | 16-12-1975 | KEINE | |
| DE 19950733 C1 | 23-05-2001 | US 6365040 B1 | 02-04-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0923971 A1
- DE 4431369 A1
- JP 59004407 A
- JP 2000325706 A
- WO 03084635 A1